# EUROPEAN PATENT APPLICATION

(11) **EP 4 848 206 A1**
(43) Date of publication of application: **02.12.2026**
(21) Application number: 25744847.2
(22) Date of filing: 20.01.2025
(51) Int. Cl.: G06T 7/11, G06T 7/38, G06T 7/174, G06T 7/269

(54) **FLUID IMAGE PROCESSING DEVICE, FLUID IMAGE PROCESSING SYSTEM, PROGRAM, AND FLUID IMAGE PROCESSING METHOD**

(30) Priority: 23.01.2024 JP 2024007998
(71) Applicant: Konica Minolta, Inc., Tokyo 100-7015 (JP)
(72) Inventor: KIUCHI Mikako, Tokyo 100-7015 (JP)
(74) Representative: MFG Patentanwälte Meyer-Wildhagen Meggle-Freund Gerhard PartG mbB
(86) International application number: PCT/JP2025/001482
(87) International publication number: WO 2025/159033

(57) **Abstract**

The present invention provides a fluid image processing device that makes it possible to suppress erroneous detection of a fluid or the like which is not a target to be monitored. A gas image processing device 1 comprises: a first image processing unit 11 that performs frequency processing for extracting a gas signal with respect to a first time-series image, which has been captured using light of a first wavelength corresponding to a gas to be monitored, to obtain a gas candidate region; a second image processing unit 12 that performs frequency processing for extracting a gas exclusion signal with respect to a second time-series image, which has been captured using light of a second wavelength differing from the first wavelength, to obtain a gas exclusion region; and a computation unit 13 that obtains a gas region on the basis of the gas candidate region and the gas exclusion region.

## Description

### Technical Field

The present invention relates to a fluid image processing device, a fluid image processing system, a program, and a fluid image processing method for detecting leakage of a fluid such as gas based on time-series images.

### Background Art

A technique has been proposed for detecting leakage of a fluid such as a gas by using an infrared image obtained by capturing, with an infrared camera, a subject that includes an object to be monitored. However, if the subject includes steam or a moving object such as a person or an automobile, the steam or the moving object may be erroneously detected as a leak of a fluid, such as gas.

On the other hand, a technique has been proposed for identifying a suspicious object or the like based on a difference in extracted features between a visible image acquired by a visible-light camera and an infrared image acquired by an infrared camera (see, for example, Patent Document 1).

### Citation List

### Patent Document

Patent Document 1: Japanese Patent No. 5991224

### Summary of Invention

### Technical Problem

However, when attempting to detect a fluid by comparing a visible image with an infrared image, steam-like noise appearing faintly may be erroneously detected as leakage of a fluid such as gas.

The present invention has been made to solve such problems, and an object of the present invention is to provide a fluid image processing device capable of suppressing erroneous detection of, for example, a fluid that is not a monitoring target. Another object of the present invention is to provide a fluid image processing system including a fluid image processing device, a program to be executed by the fluid image processing device, and a fluid image processing method.

### Solution to Problem

To solve the above-described problem, the present invention provides a fluid image processing device comprising: a first image processing section configured to perform frequency-domain processing for extracting a monitoring target from first time-series images captured with light having a first wavelength corresponding to a fluid to be monitored, and to obtain a monitoring-target candidate region; a second image processing section configured to perform frequency-domain processing for extracting the monitoring target from second time-series images captured with light having a second wavelength different from the first wavelength, and to obtain a monitoring-target exclusion region; and an arithmetic section configured to obtain the monitoring target based on the monitoring-target candidate region and the monitoring-target exclusion region.

The present invention also provides a fluid image processing system comprising: a first image acquisition section configured to acquire first time-series images captured with light having a first wavelength corresponding to a fluid to be monitored; a second image acquisition section configured to acquire second time-series images captured with light having a second wavelength different from the first wavelength; and a fluid image processing device configured to perform image processing on the first time-series images and the second time-series images, wherein the fluid image processing device comprises: a first image processing section configured to perform frequency-domain processing for extracting a monitoring target from the first time-series images and to obtain a monitoring-target candidate region; a second image processing section configured to perform frequency-domain processing for extracting the monitoring target from the second time-series images and to obtain a monitoring-target exclusion region; and an arithmetic section configured to obtain the monitoring target based on the monitoring-target candidate region and the monitoring-target exclusion region.

Furthermore, the present invention provides a program to be executed by a fluid image processing device that performs image processing on time-series images, the program causing: a first image processing section to perform frequency-domain processing for extracting a monitoring target from first time-series images captured with light having a first wavelength corresponding to a fluid to be monitored and to obtain a monitoring-target candidate region; a second image processing section to perform frequency-domain processing for extracting the monitoring target from second time-series images captured with light having a second wavelength different from the first wavelength and to obtain a monitoring-target exclusion region; and an arithmetic section to obtain the monitoring target based on the monitoring-target candidate region and the monitoring-target exclusion region.

The present invention also provides a fluid image processing method comprising: performing frequency-domain processing on first time-series images captured with light having a first wavelength corresponding to a fluid to be monitored to extract a monitoring target and obtaining a monitoring-target candidate region; performing frequency-domain processing on second time-series images captured with light having a second wavelength different from the first wavelength to extract the monitoring target and obtaining a monitoring-target exclusion region; and obtaining the monitoring target based on the monitoring-target candidate region and the monitoring-target exclusion region.

### Advantageous Effects of Invention

According to the present invention, time-series images are acquired by capturing images of a subject with light having different wavelengths corresponding to a fluid to be monitored. For these time-series images, the monitoring target is obtained based on a monitoring-target candidate region and a monitoring-target exclusion region obtained by performing frequency-domain processing to extract the monitoring target from each time-series image. Accordingly, erroneous detection of a fluid or the like that is not a monitoring target can be suppressed.

### Brief Description of Drawings

[FIG. 1] This is a functional block diagram illustrating an example of a gas image processing apparatus and a gas image processing system according to the present embodiment.
[FIG. 2] This is a flowchart illustrating an example of a gas image processing method according to the present embodiment.
[FIG. 3A] This is an explanatory diagram illustrating an example of time-series infrared images.
[FIG. 3B] This is an explanatory diagram illustrating an example of a time-series of infrared images.
[FIG. 3C] This is an explanatory diagram illustrating an example of a time- series of infrared images.
[FIG. 3D] This is an explanatory diagram illustrating an example of a time-series of infrared images.
[FIG. 4A] This is an explanatory diagram illustrating an example of a first frequency-domain-processed image from which a gas signal has been extracted.
[FIG. 4B] This is an explanatory diagram illustrating an example of a first frequency-domain-processed image from which a gas signal has been extracted.
[FIG. 4C] This is an explanatory diagram illustrating an example of a first frequency-domain-processed image from which a gas signal has been extracted.
[FIG. 4D] This is an explanatory diagram illustrating an example of a first frequency-domain-processed image from which a gas signal has been extracted.
[FIG. 5A] This is an explanatory diagram illustrating an example of a first image subjected to frequency-domain processing in which a gas signal has a maximum value.
[FIG. 5B] This is an explanatory diagram illustrating an example of a gas candidate region.
[FIG. 6A] This is an explanatory diagram illustrating an example of time-series visible images.
[FIG. 6B] This is an explanatory diagram illustrating an example of a time- series of visible images.
[FIG. 6C] This is an explanatory diagram illustrating an example of time-series visible images.
[FIG. 6D] This is an explanatory diagram illustrating an example of time-series visible images.
[FIG. 7A] This is an explanatory diagram illustrating an example of a second frequency-domain-processed image from which a gas exclusion signal has been extracted.
[FIG. 7B] This is an explanatory diagram illustrating an example of a second frequency-domain processed image from which a gas exclusion signal has been extracted.
[FIG. 7C] This is an explanatory diagram illustrating an example of a second frequency-domain-processed image from which a gas exclusion signal has been extracted.
[FIG. 7D] This is an explanatory diagram illustrating an example of a second frequency-domain-processed image from which a gas exclusion signal has been extracted.
[FIG. 8A] This is an explanatory diagram illustrating an example of a second frequency-domain processed image in which a gas exclusion signal has a maximum value.
[FIG. 8B] This is an explanatory view illustrating an example of a gas exclusion region.
[FIG. 9A] This is an explanatory diagram illustrating a first embodiment of a method for determining a gas region.
[FIG. 9B] This is an explanatory diagram illustrating a first embodiment of a method for determining a gas region.
[FIG. 10A] This is an explanatory diagram illustrating a second embodiment of a method for determining a gas region.
[FIG. 10B] This is an explanatory diagram illustrating a second embodiment of a method for determining a gas region.
[FIG. 11A] This is an explanatory diagram illustrating a fourth embodiment of a method for determining a gas region.
[FIG. 11B] This is an explanatory diagram illustrating a fourth embodiment of a method for determining a gas region.
[FIG. 12A] This is an explanatory diagram illustrating a fifth embodiment of a method for determining a gas region.
[FIG. 12B] This is an explanatory diagram illustrating a fifth embodiment of a method for determining a gas region.

### Description of Embodiments

An example of a gas image processing apparatus, which is an embodiment of the fluid image processing device of the present invention, will be described below with reference to the drawings. In addition, an example of a gas image processing system, which is an embodiment of a fluid image processing system of the present invention, will be described. Further, an example of a program executed by the gas image processing apparatus will be described. In addition, an example of a gas image processing method that is an embodiment of the fluid image processing method of the present invention will be described.

### <Configuration Example of a gas image processing apparatus and a gas image processing system >

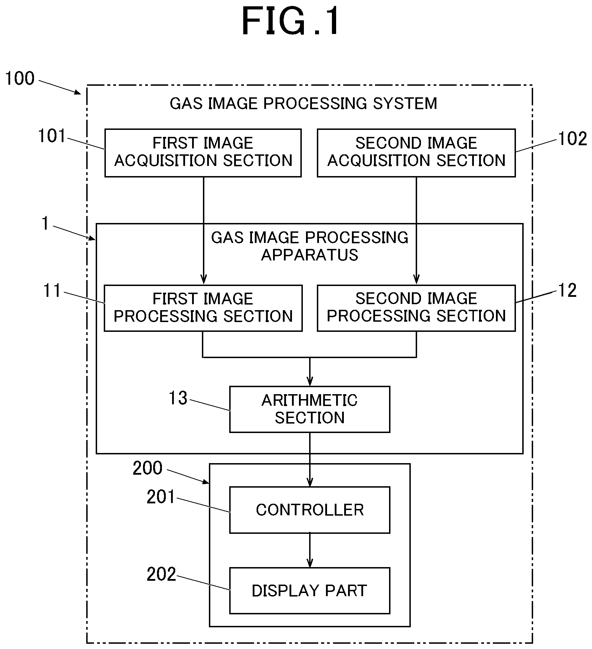

FIG. 1 is a functional block diagram illustrating an example of a gas image processing apparatus and a gas image processing system according to the present embodiment.

The gas image processing apparatus 1 includes a first image processing section 11, a second image processing section 12, and an arithmetic section 13. The gas image processing system 100 includes a first image acquisition section 101, a second image acquisition section 102, a gas image processing apparatus 1, and an information processing apparatus 200.

The gas image processing apparatus 1 is connected to a first image acquisition section 101 and a second image acquisition section 102. The first image acquisition section 101 is connected to the first image processing section 11. The second image acquisition section 102 is connected to the second image processing section 12.

The first image acquisition section 101 is a camera including an optical system, a filter, an imaging element, a signal processing section, and the like (not shown). The first image acquisition section 101 is configured to allow only light having a first wavelength corresponding to a target to be monitored to pass through a filter and be received by an imaging element. The first wavelength is, for example, infrared light. When the target to be monitored is, for example, methane, a filter configured to transmit a wavelength band from 3.2 µm to 3.4 µm is used. The first image acquisition section 101 captures, for a subject including a monitoring target, a time series of infrared still images and/or an infrared moving image, and acquires a first time-series image MD1. The gas image processing apparatus 1 may include a first image acquisition section 101.

The second image acquisition section 102 is a camera including an optical system (not shown), a filter, an imaging element, a signal processing section, and the like. The second image acquisition section 102 is configured such that only light having a second wavelength corresponding to a monitoring target passes through a filter and is received by an imaging element. The second wavelength is different from the first wavelength and is, for example, visible light. The second image acquisition section 102 captures, of a subject including a target to be monitored, a time series of visible-light still images and/or a visible-light moving image, and acquires a second time-series image MD2. The gas image processing apparatus 1 may include a first image acquisition section 101 and a second image acquisition section 102.

The first image processing section 11, the second image processing section 12, and the arithmetic section 13 are constituted by a CPU (Central Processing Unit) or the like. Additionally, the first image processing section 11, the second image processing section 12, and the arithmetic section 13 may be implemented through processing performed by a DSP (Digital Signal Processor). At least a portion of the first image processing section 11, the second image processing section 12, and the arithmetic section 13 may be implemented by processing performed by a DSP (Digital Signal Processor). Additionally, the first image processing section 11, the second image processing section 12, and the arithmetic section 13 may all be implemented by processing performed by a DSP (Digital Signal Processor).

The first image processing section 11 performs frequency-domain processing for extracting gas on a first time-series image MD1 to acquire a first frequency-domain-processed image MD10. Additionally, the first image processing section 11 acquires, from the first frequency-domain-processed image MD10, a gas candidate region CL11 that is an example of a monitoring-target candidate region.

The second image processing section 12 performs frequency-domain processing for extracting gas on a second time-series image MD2 to acquire a second frequency-domain-processed image MD20. Additionally, the second image processing section 12 acquires, from the second frequency-domain-processed image MD20, a gas exclusion region CL21 that is an example of a monitoring-target exclusion region.

The arithmetic section 13 acquires the gas region Eg based on the gas candidate region CL11 and the gas exclusion region CL21.

The information processing apparatus 200 is, for example, a personal computer, a smartphone, a tablet terminal, or the like. The information processing apparatus 200 includes a controller 201 and an output section 202.

The controller 201 includes a CPU or the like. In addition, the controller 201 may be implemented by processing performed by a DSP (Digital Signal Processor). The output section 202 includes a display or the like. The output section 202 is, for example, a liquid crystal display. Further, instead of the liquid crystal display, the output section 202 may be an organic EL display (Organic Light Emitting Diode display), a plasma display, or the like.

The information processing apparatus 200 receives input of a first time-series image MD1, a first frequency-domain-processed image MD10, and a gas candidate region CL11 acquired by the gas image processing apparatus 1. The controller 201 causes an output section 202 to display the first time-series image MD1, the first frequency-domain-processed image MD10, and the gas candidate region CL11.

In addition, the information processing apparatus 200 receives, as inputs, a second time-series image MD2, a second frequency-domain-processed image MD20, and a gas exclusion region CL21 acquired by the gas image processing apparatus 1. The controller 201 causes an output section 202 to display the second time-series image MD2, the second frequency-domain-processed image MD20, and the gas exclusion region CL21.

In addition, a gas region Eg acquired by the gas image processing apparatus 1 is input to the information processing apparatus 200. The controller 201 causes the output section 202 to display the gas region Eg.

### <Functional Example of a Program >

The first image processing section 11, the second image processing section 12, and the arithmetic section 13 implement the above-described functions by executing a program.

The program causes the first image processing section 11 to execute a step of performing frequency-domain processing for extracting gas on a first time-series image MD1. Further, the program causes the first image processing section 11 to execute a step of acquiring a gas candidate region CL11 from a first frequency-domain-processed image MD10.

Furthermore, the program causes the second image processing section 12 to execute a step of performing frequency-domain processing for extracting gas on a second time-series image MD2. Further, the program causes the second image processing section 12 to execute a step of acquiring a gas exclusion region CL21 from a second frequency-domain-processed image MD20.

Furthermore, the program causes the arithmetic section 13 to execute a step of obtaining a gas region Eg based on the gas candidate region CL11 and the gas exclusion region CL21.

The program is stored in RAM (Random Access Memory), ROM (Read Only Memory), or the like. The program may be stored in an HDD or the like. Furthermore, the program may be provided in a form stored in a storage medium. The storage medium is an external storage medium such as a magnetic disk, an optical disk, or a solid-state drive (SSD).

In addition, by updating the program, a function of acquiring a gas exclusion region from a visible image and a function of acquiring a gas region based on a gas candidate region and the gas exclusion region may be added. Further, part or all of the first image processing section 11, the second image processing section 12, and the arithmetic section 13 may be implemented by processing performed by a dedicated hardware circuit.

### <Operational Example of Gas Image Processing Method >

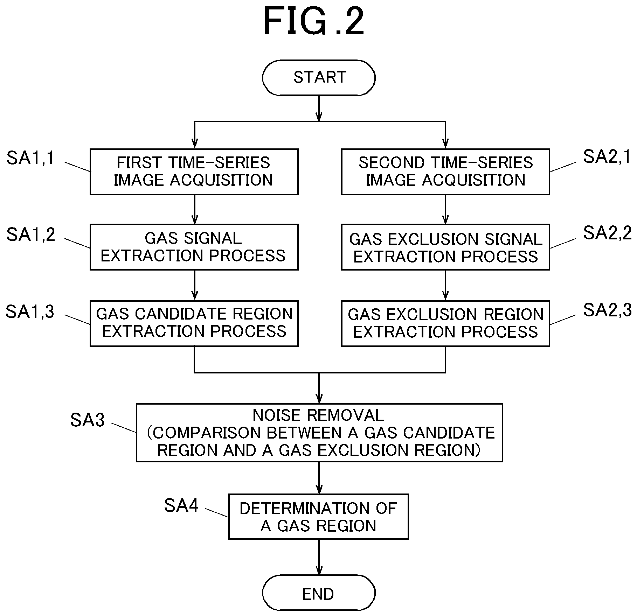

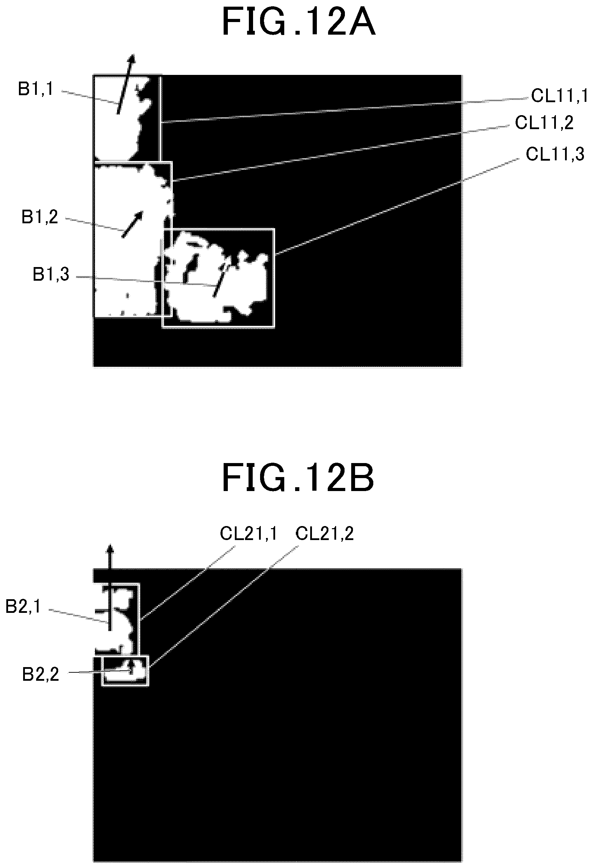

FIG. 2 is a flowchart illustrating an example of a gas image processing method according to the present embodiment. Next, as an example of a gas image processing method, an example of the operation of the gas image processing apparatus 1 executed by a program will be described.

In step SA1(1), the first image processing section 11 acquires a first time-series image MD1 from the first image acquisition section 101. Also, in step SA1(2), the first image processing section 11 performs frequency-domain processing for extracting a gas signal on the first time-series image MD1, thereby acquiring a first frequency-domain-processed image MD10. Further, in step SA1(3), the first image processing section 11 acquires a gas candidate region CL11 from the first frequency-domain-processed image MD10.

In step SA2(1), the second image processing section 12 acquires the second time-series images MD2 from the second image acquisition section 102. In step SA2(2), the second image processing section 12 performs frequency-domain processing on the second time-series images MD2 to extract a gas exclusion signal, thereby acquiring a second frequency-domain-processed image MD20. Further, in step SA2(3), the second image processing section 12 acquires a gas exclusion region CL21 from the second frequency-domain-processed image MD20.

In step SA3, the arithmetic section 13 compares the gas candidate region CL11 with the gas exclusion region CL21 to remove noise. In step SA4, the arithmetic section 13 acquires the gas region Eg based on the gas candidate region CL11 and the gas exclusion region CL21.

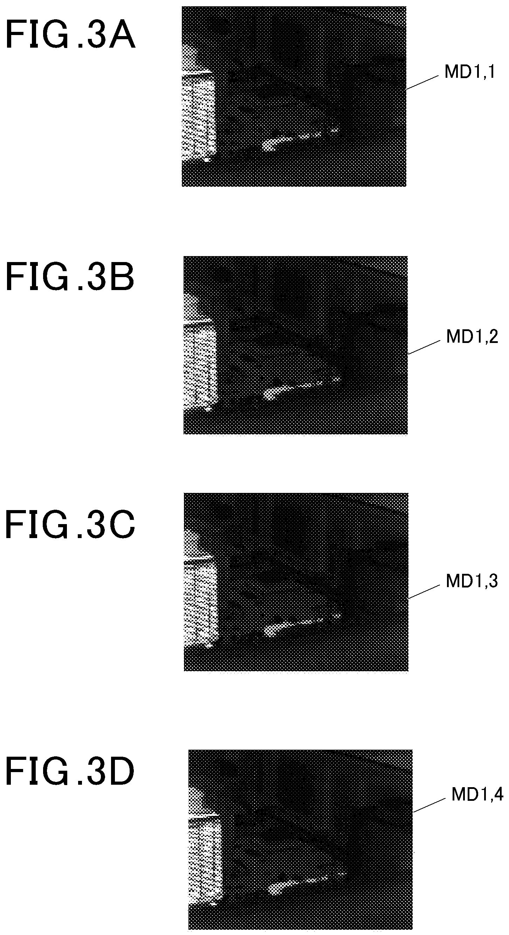

Details of the operation will be described below. FIGS. 3A, 3B, 3C, and 3D are explanatory diagrams illustrating an example of time-series infrared images. The first image acquisition section 101 acquires a plurality of time-series infrared images MD1(1) to MD1(4). The infrared images MD1(1) to MD1(4) include a gas region to be monitored. The infrared image MD1(1) is the first infrared image at the start of imaging. Infrared images MD1(2), MD1(3), and MD1(4) are infrared images captured 0.2, 0.4, and 0.6 seconds later, respectively. The number of infrared images to be acquired and the time interval are merely examples.

The first image processing section 11 performs, on these infrared images, image processing described in, for example, Japanese Patent No. 6245418. In the image processing described in this publication, frequency-domain processing is performed to extract a gas signal by capturing wind-induced fluctuations of gas. As a result, first frequency-domain-processed images MD10(1) to MD10(4), from which gas signals have been extracted, are obtained.

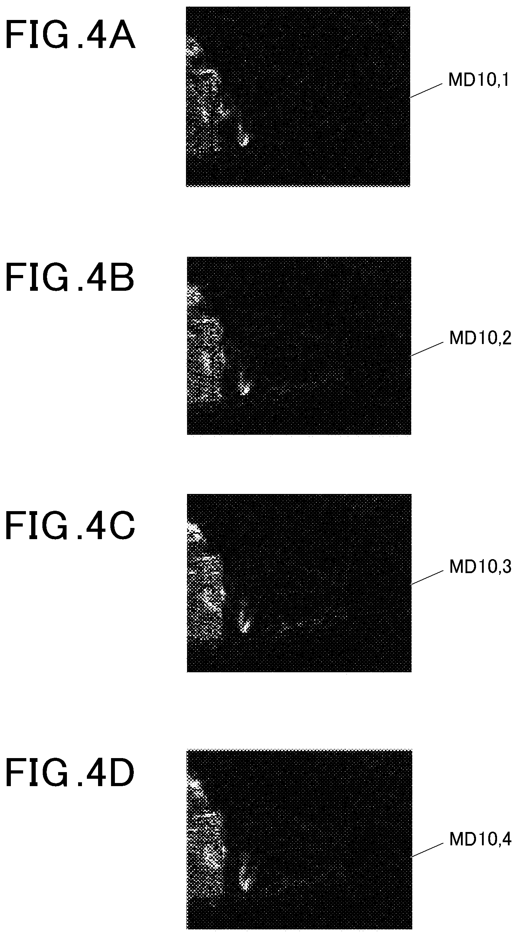

FIGS. 4A, 4B, 4C, and 4D are explanatory diagrams illustrating an example of a first frequency-domain processed image from which a gas signal has been extracted. The first frequency-domain-processed image MD10(1) is an image obtained by extracting a gas signal from the infrared image MD1(1). The first frequency-domain-processed image MD10(2) is an image obtained by extracting a gas signal from the infrared image MD1(2). The first frequency-domain-processed image MD10(3) is an image obtained by extracting a gas signal from the infrared image MD1(3). The first frequency-domain-processed image MD10(4) is an image obtained by extracting a gas signal from the infrared image MD1(4).

Next, the first image processing section 11 acquires a gas candidate region CL11 from a first frequency-domain-processed image MD10 from which a gas signal has been extracted. The first image processing section 11 obtains a maximum value of the gas signal among first frequency-domain-processed images MD10 from which a gas signal has been extracted for a period of n seconds (e.g., 1 second).

The first image processing section 11 performs noise removal and/or threshold value processing on a first frequency-domain-processed image MD10(max) in which a gas signal has a maximum value, using a known method. Accordingly, the first image processing section 11 acquires the gas candidate region CL11.

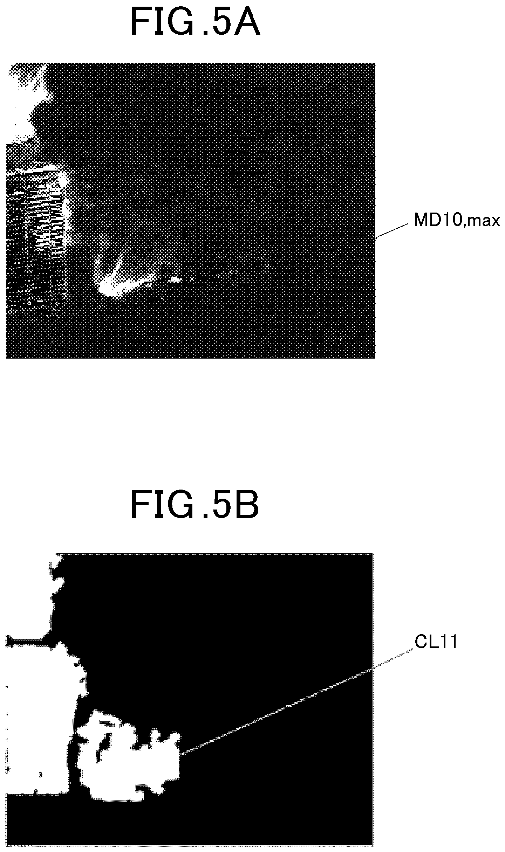

FIG. 5A is an explanatory diagram illustrating an example of a first frequency-domain-processed image having a maximum gas-signal value, and FIG. 5B is an explanatory diagram illustrating an example of a gas candidate region. The method of acquiring the gas signal and the method of acquiring the gas candidate region are merely examples, and other methods may be used. When a plurality of gas candidate regions are present in one image, labeling processing is performed by a known method to assign a label to each gas candidate region.

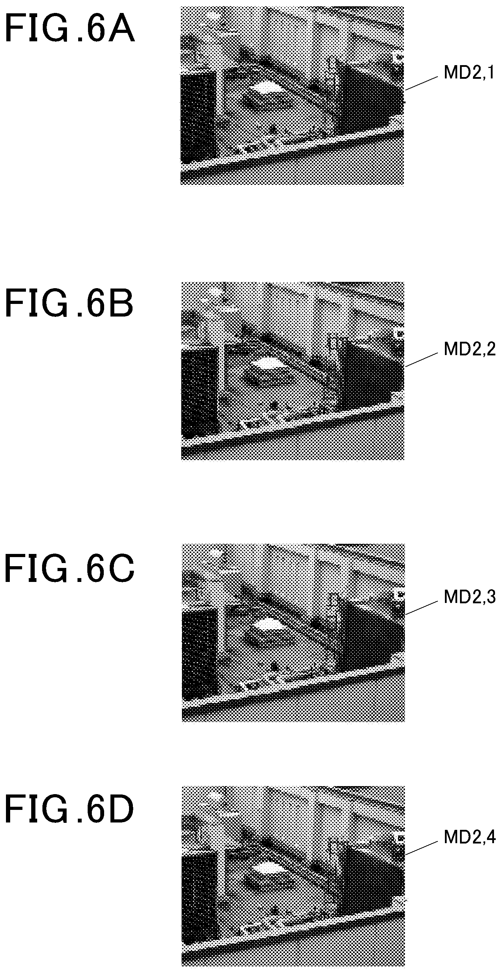

FIGS. 6A, 6B, 6C, and 6D are explanatory diagrams illustrating an example of time-series visible images. A second image acquisition section 102 acquires a plurality of time-series visible images MD2(1) to MD2(4). The visible images MD2(1) to MD2(4) include a gas region to be monitored. The visible image MD2(1) is the first visible image at the start of imaging. The visible image MD2(2) is captured 0.2 seconds later, the visible image MD2(3) is captured 0.4 seconds later, and the visible image MD2(4) is captured 0.6 seconds later. The number of visible images to be acquired and the time interval are merely examples.

A second image processing section 12 performs grayscale conversion processing on these visible images in a known manner. The second image processing section 12 performs, on the grayscaled visible image, image processing described in, for example, Japanese Patent No. 6245418, in the same manner as for an infrared image. By performing frequency-domain processing on the visible images to extract a gas signal by capturing wind-induced fluctuations of gas, a gas exclusion signal, such as steam that fluctuates due to wind, is extracted. The gas exclusion signal is a noise component of the gas signal. Thus, second frequency-domain-processed images MD20(1) to MD20(4), from which the gas exclusion signal has been extracted, are obtained.

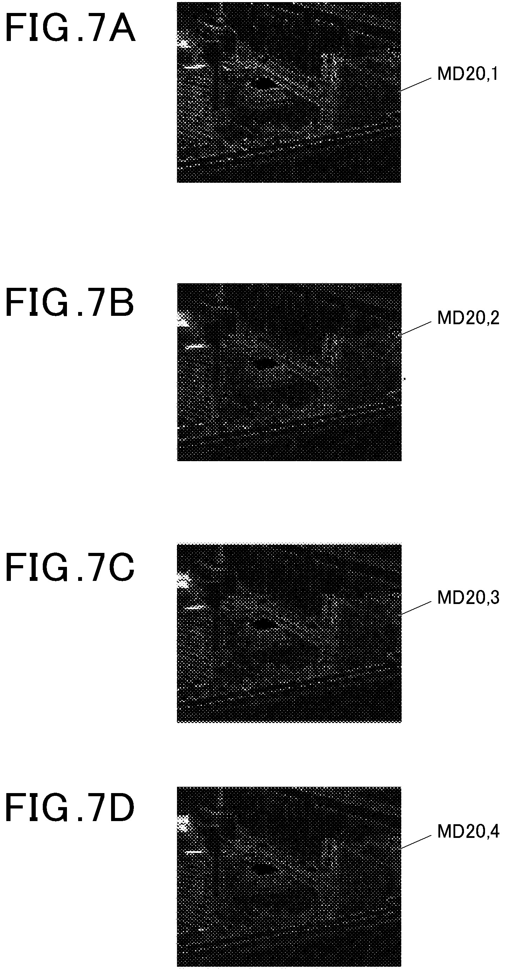

FIGS. 7A, 7B, 7C, and 7D are explanatory diagrams showing examples of a second frequency-domain-processed image from which a gas exclusion signal has been extracted. The second frequency-domain-processed image MD20(1) is an image obtained by extracting a gas exclusion signal from the visible image MD2(1). The second frequency-domain-processed image MD20(2) is an image obtained by extracting a gas exclusion signal from the visible image MD2(2). The second frequency-domain-processed image MD20(3) is an image obtained by extracting a gas exclusion signal from the visible image MD2(3). The second frequency-domain processed image MD20(4) is an image obtained by extracting a gas exclusion signal from the visible image MD2(4).

Next, the second image processing section 12 acquires a gas exclusion region CL21 from the second frequency-domain-processed image MD20 from which a gas exclusion signal has been extracted. The second image processing section 12 obtains a maximum value of a gas exclusion signal among second frequency-domain-processed images MD20 corresponding to n seconds, for example, among second frequency-domain-processed images MD20 corresponding to one second from which a gas exclusion signal has been extracted.

The second image processing section 12 performs, by a known technique, noise removal and threshold value processing on the second frequency-domain-processed image MD20(max) having a maximum value of a gas exclusion signal. Thus, the second image processing section 12 acquires a gas exclusion region CL21.

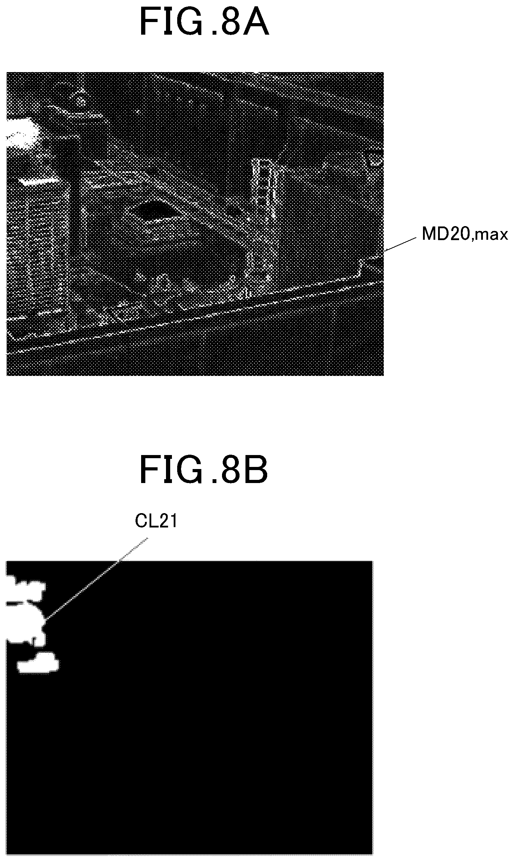

FIG. 8A is an explanatory diagram illustrating an example of a second frequency-domain-processed image in which a gas exclusion signal has a maximum value, and FIG. 8B is an explanatory diagram illustrating an example of a gas exclusion region. The method of obtaining the gas exclusion signal and the method of obtaining the gas exclusion region are merely examples, and other methods may be used. When a plurality of gas exclusion regions are present in a single image, labeling processing is performed using a known method such that each gas exclusion region is labeled.

The arithmetic section 13 determines, using the gas candidate region CL11 and the gas exclusion region CL21, whether a region is a gas region or noise, and determines a gas region Eg. When a plurality of gas candidate regions are present in a single image, the gas candidate regions segmented by labeling are indicated as gas candidate regions CL11(h) (h = 1, 2, ..., m). In addition, when a plurality of gas exclusion regions are present in a single image, the gas exclusion regions segmented by labeling are indicated as gas exclusion regions CL21(i) (i = 1, 2, ..., n).

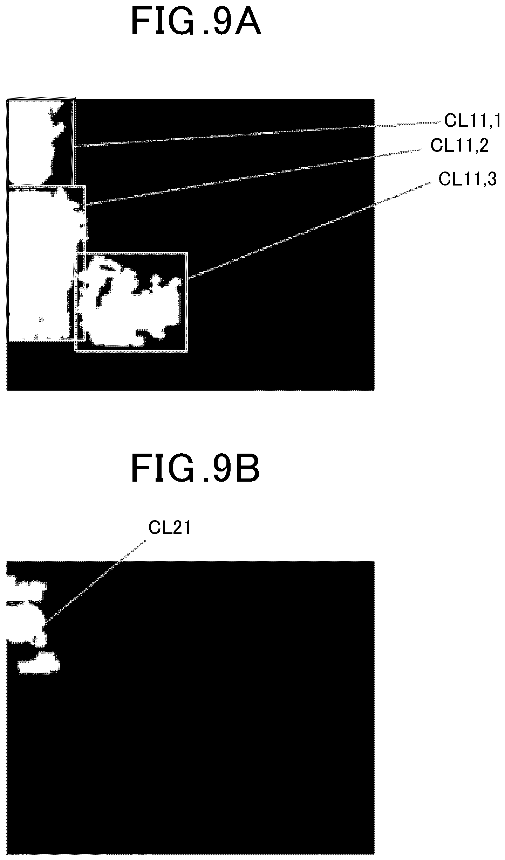

FIGS. 9A and 9B are explanatory diagrams illustrating a first embodiment of a method for determining a gas region. FIG. 9A illustrates a case where a plurality of gas candidate regions are present in a single image, and the gas candidate regions denoted by CL11(1) to CL11(3) are gas candidate regions segmented through labeling. FIG. 9B illustrates a gas exclusion region.

The arithmetic section 13 compares an area ratio of gas candidate regions CL11(1) to CL11(3) shown in FIG. 9A to a gas exclusion region CL21 shown in FIG. 9B. Specifically, the arithmetic section 13 calculates, of an area of the gas candidate region CL11(1), a ratio of an overlapping area between the gas candidate region CL11(1) and the gas exclusion region CL21. Similarly, the arithmetic section 13 calculates a ratio of an overlapping area between the gas candidate region CL11(2) and the gas exclusion region CL21 to an area of the gas candidate region CL11(2). Further, the arithmetic section 13 calculates a ratio of an overlapping area between the gas candidate region CL11(3) and the gas exclusion region CL21 to an area of the gas candidate region CL11(3). A region in which the gas candidate region CL11(1) overlaps the gas exclusion region CL21 is regarded as non-gas noise. Similarly, a region in which the gas candidate region CL11(2) and the gas exclusion region CL21 overlap is regarded as noise other than gas. A region in which the gas candidate region CL11(3) overlaps the gas exclusion region CL21 is regarded as noise other than gas. Therefore, when the ratio is equal to or greater than a predetermined threshold value (e.g., 60%), the arithmetic section 13 determines that it is noise. If the ratio is less than a threshold value, the arithmetic section 13 determines that the region is a gas region and outputs the determination as a detection result of a gas region Eg.

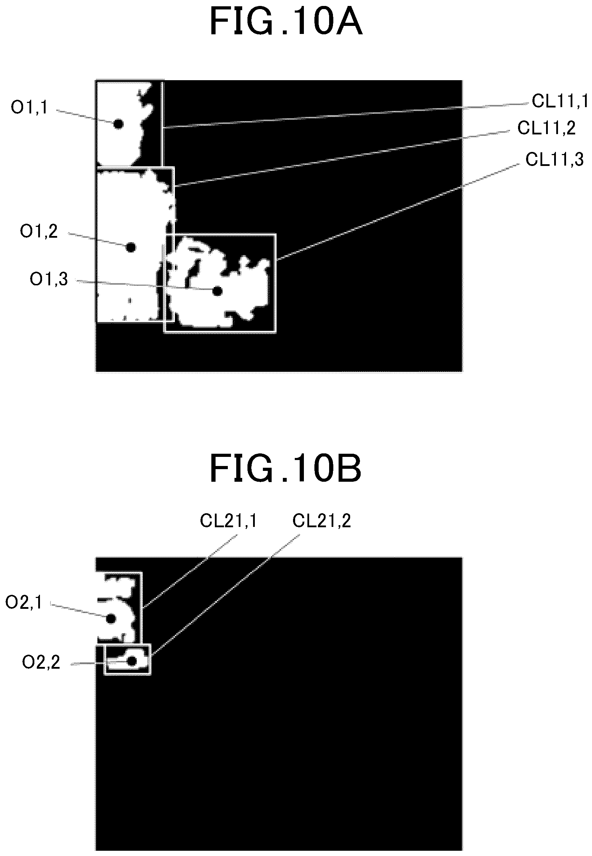

FIGS. 10A and 10B are explanatory diagrams illustrating a second embodiment of a method for determining a gas region. The comparison between the gas candidate region CL11 and the gas exclusion region CL21 may be performed based on a distance between centroid coordinates of the respective regions. The arithmetic section 13 compares the distance between centroid coordinates O1 of the gas candidate region CL11 shown in FIG. 10A and centroid coordinates O2 of the gas exclusion region CL21 shown in FIG. 10B. FIG. 10A shows a case where a plurality of gas candidate regions are present in one image, and the gas candidate regions indicated by CL11(1) to CL11(3) are gas candidate regions segmented through labeling. FIG. 10B shows a case where a plurality of gas exclusion regions are present in one image, and the gas exclusion regions indicated by CL21(1) to CL21(2) are gas exclusion regions segmented by labeling.

The arithmetic section 13 calculates the centroid coordinates O1(1) of the gas candidate region CL11(1) shown in FIG. 10A. In addition, the arithmetic section 13 calculates the centroid coordinates O2(i) (i = 1, 2) of each gas exclusion region CL21(i) (i = 1, 2) shown in FIG. 10B. Then, the arithmetic section 13 determines distances between a centroid of the gas candidate region CL11(1) and the respective centroids of the gas exclusion regions CL21(i) (i = 1, 2). Similarly, the arithmetic section 13 calculates the centroid coordinates O1(2) of the gas candidate region CL11(2).

In addition, the arithmetic section 13 calculates the centroid coordinates O2(i) (i = 1, 2) of each gas exclusion region CL21(i) (i = 1, 2). Then, the arithmetic section 13 determines distances between a centroid of the gas candidate region CL11(2) and respective centroids of the gas exclusion regions CL21(i) (i = 1, 2). Further, the arithmetic section 13 calculates the centroid coordinates O1(3) of the gas candidate region CL11(3). In addition, the arithmetic section 13 calculates centroid coordinates O2(i) (i = 1, 2) of respective gas exclusion regions CL21(i) (i = 1, 2). Then, the arithmetic section 13 determines the distances between the centroid of the gas candidate region CL11(3) and the respective centroids of the gas exclusion regions CL21(i) (i = 1, 2). Further, it is determied whether there is any gas exclusion region CL21(i) for which a distance between centroid coordinates O1(1) of the gas candidate region CL11(1) and centroid coordinates O2(i) is small. If there is one or more for which a distance between centroid coordinates O1(1) and centroid coordinates O2(i) is small, the gas candidate region CL11(1) is regarded as noise other than gas. Similarly, it is determined whether there is any gas exclusion region CL21(i) for which a distance between centroid coordinates O1(2) of the gas candidate region CL11(2) and centroid coordinates O2(i) is small. If there is one or more i for which a distance between centroid coordinates 01(2) and centroid coordinates O2(i) is small, the gas candidate region CL11(2) is regarded as noise. Further, it is determined whether there is any gas exclusion region CL21(i) having a distance between centroid coordinates 01(3) of the gas candidate region CL11(3) and centroid coordinates O2(i) that is small. If there is at least one gas exclusion region CL21(i) for which a distance between centroid coordinates 01(3) and centroid coordinates O2(i) is small, the gas candidate region CL11(3) is regarded as noise. Accordingly, if the centroid distance is less than a predetermined threshold value (e.g., 10 pixels), the arithmetic section 13 determines that it is noise. Further, if all the centroid distances are equal to or greater than a predetermined threshold value, the arithmetic section 13 determines that the region is a gas region and outputs this as a detection result of the gas region Eg.

As a third embodiment of the gas region determination method, comparison between the gas candidate region CL11 and the gas exclusion region CL21 may be performed based on shape similarity. The arithmetic section 13 calculates a degree of match, such as NCC (normalized cross-correlation), by pattern matching. The NCC is calculated by the following equation, where I(x, y) is a pixel value of an input image, T(x, y) is a pixel value of a template image, w is a width of the template image, h is a height of the template image, and dx and dy indicate scanning positions.$NCC \left({d}_{x}, {d}_{y}\right) = \frac{{\sum }_{x = 0}^{w - 1} {\sum }_{y = 0}^{h - 1} \left\{I\left({d}_{x}+x,{d}_{y}+y\right)T\left(x, y\right)\right\}}{\sqrt{{\sum }_{x = 0}^{w - 1} {\sum }_{y = 0}^{h - 1} {\left\{I\left({d}_{x}+x,{d}_{y}+y\right)\right\}}^{2}} \sqrt{{\sum }_{x = 0}^{w - 1} {\sum }_{y = 0}^{h - 1} {\left\{T\left(x, y\right)\right\}}^{2}}}$ Equation (1)

When a plurality of gas candidate regions are present in one image, the gas candidate region indicated by CL11(h) is a gas candidate region segmented by labeling. In addition, when a plurality of gas exclusion regions are present in one image, the gas exclusion region indicated by CL21(i) is a gas exclusion region segmented by labeling. In the third embodiment, a case where h = 1, 2, 3 and i = 1, 2 is taken as an example. A larger NCC value indicates a higher degree of similarity. Therefore, the arithmetic section 13 calculates an NCC between each gas candidate region CL11(h) (h = 1, 2, 3) and each gas exclusion region CL21(i) (i = 1, 2). The arithmetic section 13 determines a gas candidate region CL11(h) having a gas exclusion region CL21(i) whose NCC is equal to or greater than a predetermined threshold value (e.g., 0.7) to be noise. If all NCCs are less than the threshold value, the arithmetic section 13 determines that the gas candidate region CL11(h) is a gas region, and outputs the gas candidate region CL11(h) as a detection result of the gas region Eg.

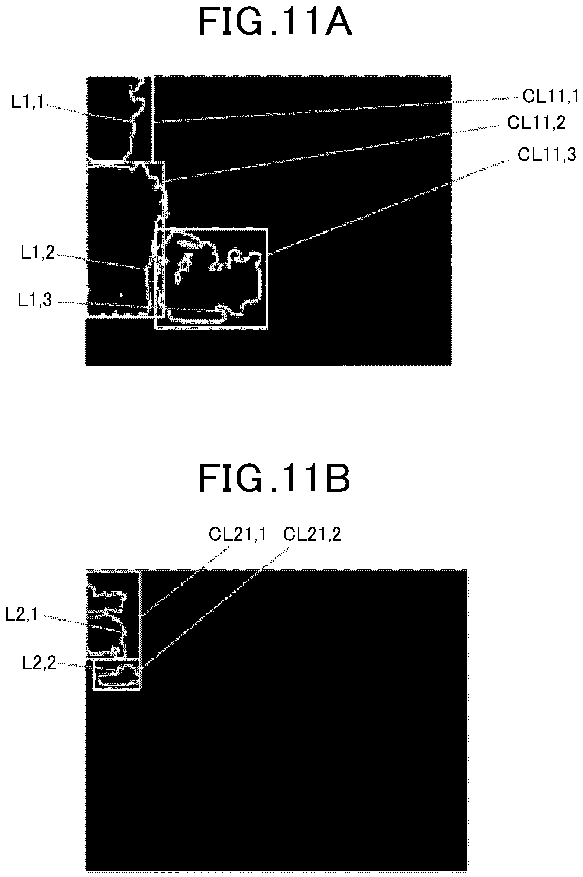

FIGS. 11A and 11B are explanatory diagrams illustrating a fourth embodiment of a method for determining a gas region. The gas candidate region CL11 and the gas exclusion region CL21 may be compared based on contour similarity. FIG. 11A shows a case where a plurality of gas candidate regions are present in one image, and the gas candidate regions indicated by CL11(1) to CL11(3) are gas candidate regions segmented by labeling. FIG. 11B shows a case where a plurality of gas exclusion regions are present within one image, and the gas exclusion regions indicated by CL21(1) to CL21(2) are gas exclusion regions segmented by labeling.

The arithmetic section 13 extracts the contour line L1(1) of the gas candidate region CL11(1) shown in FIG. 11A. The arithmetic section 13 also extracts the contour line L1(2) of the gas candidate region CL11(2). The arithmetic section 13 further extracts a contour line L1(3) of the gas candidate region CL11(3). The arithmetic section 13 also extracts a contour line L2(1) of the gas exclusion region CL21(1) and a contour line L2(2) of the gas exclusion region CL21(2) shown in FIG. 11B. The contour line of each region can be extracted using known techniques such as a Sobel filter or a Laplacian filter. The arithmetic section 13 calculates Hu moments, each represented by seven elements that are invariant to scale, position, and rotation, for each contour. The contour similarity can be calculated by computing a distance between the Hu moments. Hu moments are defined as follows:.$\begin{matrix}{h}_{0} = {η}_{20} + {η}_{02} \\ {h}_{1} = {\left({η}_{20}-{η}_{02}\right)}^{2} + 4 {η}_{11}^{2} \\ {h}_{2} = {\left({η}_{30}-3{η}_{12}\right)}^{2} + {\left(3{η}_{21}-{η}_{03}\right)}^{2} \\ {h}_{3} = {\left({η}_{30}+3{η}_{12}\right)}^{2} + {\left({η}_{21}-{η}_{03}\right)}^{2} \\ {h}_{4} = \left({η}_{30}-3{η}_{12}\right) \left({η}_{30}+{η}_{12}\right) \left[{\left({η}_{30}+{η}_{12}\right)}^{2}-3{\left({η}_{21}+{η}_{03}\right)}^{2}\right] + \left(\begin{matrix}3 {η}_{21} \\ - {η}_{03}\end{matrix}\right) \left({η}_{21}+{η}_{03}\right) \left[3{\left({η}_{30}+3{η}_{12}\right)}^{2}-{\left({η}_{21}+{η}_{03}\right)}^{2}\right] \\ {h}_{5} = \left({η}_{20}-{η}_{02}\right) \left[{\left({η}_{30}+{η}_{12}\right)}^{2}-{\left({η}_{21}+{η}_{03}\right)}^{2}\right] + 4 {η}_{11} \left({η}_{30}+{η}_{12}\right) \left({η}_{21}+{η}_{03}\right) \\ {h}_{6} = \left(3{η}_{21}-{η}_{03}\right) \left({η}_{21}+{η}_{03}\right) \left[3{\left({η}_{30}+{η}_{12}\right)}^{2}-{\left({η}_{21}+{η}_{03}\right)}^{2}\right] - \left(\begin{matrix}{η}_{30} \\ - 3 {η}_{12}\end{matrix}\right) \left({η}_{21}+{η}_{03}\right) \left[3{\left({η}_{30}+3{η}_{12}\right)}^{2}-{\left({η}_{21}+{η}_{03}\right)}^{2}\right]\end{matrix}$ Equation (2) *ηⱼᵢ*: ABBREVIATION FOR THE NORMALIZED CENTRAL MOMENT nuⱼᵢ
nuⱼᵢ is obtained by the following equation.${nu}_{ji} = \frac{{mu}_{ji}}{{{m}_{00}}^{\left(i+j\right) / \left(2+1\right)}}$ Equation (3)

Here, muⱼᵢ is a central moment, and mⱼᵢ is a spatial moment. muⱼᵢ is represented by the following equation.${mu}_{ji} = {\sum }_{x , y} \left(I\left(x, y\right)⋅{\left(x-\overline{x}\right)}^{j}⋅{\left(y-\overline{y}\right)}^{i}\right)$ Equation (4)
*I*(*x, y):* PIXEL VALUE AT COORDINATE VALUES (x, y)
(*x̅*, *y̅*): CENTROID OF COORDINATE VALUES (x, y)

In addition, mⱼᵢ is expressed by the following equation.${m}_{ji} = {\sum }_{x , y} \left(I\left(x, y\right)⋅{x}^{j}⋅{y}^{i}\right)$ Equation (5)

Further, when the contour of the gas candidate region CL11 is A and the contour of the gas exclusion region CL21 is B, and the respective Hu Moments are hᵢ^{A} and hᵢ^{B} (i=1, 2, ..., 7), a Hu Moments distance D can be calculated, for example, by the following equation.$D \left(A, B\right) = {\sum }_{i = 1 , … , 7} \left|{{m}_{i}}^{A}-{{m}_{i}}^{B}\right|$ Equation (6)

Here, mᵢ^{A} and mᵢ^{B} are expressed by the following equations.$\begin{matrix}{{m}_{i}}^{A} = sign \left({h}_{i}^{A}\right) ⋅ log {h}_{i}^{A} \\ {{m}_{i}}^{B} = sign \left({h}_{i}^{B}\right) ⋅ log {h}_{i}^{B}\end{matrix}$ Equation (7)

A smaller value of a Hu moments distance D(A, B) indicates a higher degree of similarity. Therefore, the arithmetic section 13 calculates Hu moments distances D(A, B) between each gas candidate region CL11(h) (h = 1, 2, 3) and each gas exclusion region CL21(i) (i = 1, 2). The arithmetic section 13 determines a gas candidate region CL11(h) having at least one gas exclusion region CL21(i) for which a Hu moments distance D(A, B) is less than a predetermined threshold value (e.g., 0.4) to be noise. Further, the arithmetic section 13 determines, as a gas region, a gas candidate region CL11(h) for which all Hu moments distances D(A, B) are equal to or greater than the threshold value, and outputs the determined gas region as a detection result of a gas region Eg.

FIGS. 12A and 12B are explanatory diagrams illustrating a fifth embodiment of a method for determining a gas region. The comparison between the gas candidate region CL11 and the gas exclusion region CL21 may be performed based on similarity between the motion vectors of the respective regions. The arithmetic section 13 obtains optical flow for pixels in the gas candidate region CL11 shown in FIG. 10A and for pixels in the gas exclusion region CL21 shown in FIG. 10B. To calculate the optical flow, a known method such as a gradient method or a Lucas-Kanade method is used.

FIG. 12A illustrates a case in which a plurality of gas candidate regions are present in one image, and the gas candidate regions denoted by CL11(1) to CL11(3) are gas candidate regions segmented by labeling. FIG. 12B illustrates a case where a plurality of gas exclusion regions are present in a single image, and the gas exclusion regions indicated by CL21(1)-(2) are gas exclusion regions that have been separated by labeling.

The arithmetic section 13 calculates an average value of optical flow for pixels in gas candidate regions CL11(1), CL11(2), and CL11(3). In addition, the arithmetic section 13 calculates an average value of optical flow for pixels in gas exclusion regions CL21(1) and CL21(2).

The arithmetic section 13 acquires an average optical flow of pixels in the gas candidate region CL11(1) as a motion vector B1(1) of the gas candidate region CL11(1). In addition, the arithmetic section 13 acquires an average value of optical flow for pixels in the gas candidate region CL11(2) as a motion vector B1(2) of the gas candidate region CL11(2). Further, the arithmetic section 13 acquires an average value of optical flow for pixels in the gas candidate region CL11(3) as a motion vector B1(3) of the gas candidate region CL11(3). In addition, the arithmetic section 13 acquires an average value of optical flow for pixels in the gas exclusion region CL21(1) as a motion vector B2(1) of the gas exclusion region CL21(1). Further, the arithmetic section 13 acquires an average value of optical flow of pixels in the gas exclusion region CL21(2) as a motion vector B2(2) of the gas exclusion region CL21(2).

A gas candidate region CL11(h) for which an angle between a motion vector B1(h) (h = 1, 2, 3) and a motion vector B2(i) (i = 1, 2) is small is regarded as non-gas noise. Accordingly, the arithmetic section 13 obtains, for the gas candidate region CL11(h), an angle with respect to a motion vector of each gas exclusion region CL21(i). If one or more angles between the motion vectors are less than a predetermined threshold value (e.g., 30 degrees), the arithmetic section 13 determines that it is noise. If all angles between the motion vectors are equal to or greater than the threshold value, the arithmetic section 13 determines that the region is a gas region and outputs the determination as a detection result of the gas region Eg.

Note that the method for calculating the motion vector is not limited to optical flow. For example, the motion vector may be calculated by template matching such as SAD (Sum of Absolute Differences) or NCC (Normalized Cross-Correlation).

Further, the comparison between the gas candidate region CL11 and the gas exclusion region CL21 may be performed by combining two or more of the first to fifth embodiments described above.

### Industrial Applicability

The present invention is applicable to a fluid image processing device, a fluid image processing system, a program, and a fluid image processing method for detecting leakage of a fluid such as gas from time-series images.

### Reference Signs List

1: gas image processing apparatus; 11: first image processing section; 12: second image processing section; 13: arithmetic section; 100: gas image processing system; 101: first image acquisition section; 102: second image acquisition section; 200: information processing apparatus; 201: controller; 202: output section

## Claims

1. A fluid image processing device comprising:
a first image processing section configured to perform frequency-domain processing for extracting a monitoring target from a first time-series image captured with light of a first wavelength corresponding to a fluid to be monitored, and to acquire a monitoring-target candidate region;
a second image processing section configured to perform frequency-domain processing for extracting a monitoring target from a second time-series image captured with light of a second wavelength different from the first wavelength, and to acquire a monitoring-target exclusion region; and
an arithmetic section configured to acquire the monitoring target based on the monitoring-target candidate region and the monitoring-target exclusion region.

2. The fluid image processing device according to claim 1, wherein the arithmetic section compares a gas candidate region with a gas exclusion region to obtain a gas region.

3. The fluid image processing device according to claim 1, wherein the first image processing section is connected to a first image acquisition section capable of capturing an infrared image.

4. The fluid image processing device according to claim 1, wherein the second image processing section is connected to a second image acquisition section capable of capturing a visible image.

5. The fluid image processing device according to claim 3, wherein the second image processing section is connected to a second image acquisition section capable of capturing an infrared image having a wavelength different from a wavelength of the infrared image captured by the first image acquisition section.

6. The fluid image processing device according to claim 1, wherein the arithmetic section compares an area ratio of a gas candidate region to an area of a gas exclusion region to obtain a gas region.

7. The fluid image processing device according to claim 1, wherein the arithmetic section acquires a gas region by comparing centroid coordinates of a gas candidate region and a gas exclusion region.

8. The fluid image processing device according to claim 1, wherein the arithmetic section acquires a gas region by comparing shapes of respective regions of a gas candidate region and a gas exclusion region.

9. The fluid image processing device according to claim 1, wherein the arithmetic section acquires a gas region by comparing contours of respective regions of a gas candidate region and a gas exclusion region.

10. The fluid image processing device according to claim 1, wherein the arithmetic section acquires a gas region by comparing motion vectors of a gas candidate region and a gas exclusion region.

11. The fluid image processing device according to claim 1, further comprising a first image acquisition section connected to the first image processing section and capable of capturing an image with light having the first wavelength.

12. The fluid image processing device according to claim 1, further comprising:
a first image acquisition section connected to the first image processing section and capable of capturing an image with light having the first wavelength; and
a second image acquisition section connected to the second image processing section and capable of capturing an image with light having the second wavelength different from the first wavelength.

13. A fluid image processing system comprising:
a first image acquisition section configured to acquire a first time-series image captured with light having a first wavelength corresponding to a fluid to be monitored;
a second image acquisition section configured to acquire a second time-series image captured with light having a second wavelength different from the first wavelength; and
a fluid image processing device that performs image processing on the first time-series image and the second time-series image, wherein
the fluid image processing device includes:
a first image processing section configured to perform frequency-domain processing on the first time-series image to extract a monitoring target and to acquire a monitoring-target candidate region;
a second image processing section configured to perform frequency-domain processing on the second time-series image to extract a monitoring target and to acquire a monitoring-target exclusion region; and
an arithmetic section configured to acquire the monitoring target based on the monitoring-target candidate region and the monitoring-target exclusion region.

14. A program to be executed by a fluid image processing device that performs image processing on time-series images, the program
causing a first image processing section to execute a step of performing frequency-domain processing on a first time-series image captured with light having a first wavelength corresponding to a fluid to be monitored to extract a monitoring target and to acquire a monitoring-target candidate region,
causing a second image processing section to execute a step of performing frequency-domain processing on a second time-series image captured with light having a second wavelength different from the first wavelength to extract a monitoring target and to acquire a monitoring-target exclusion region, and
causing an arithmetic section to execute a step of acquiring the monitoring target based on the monitoring-target candidate region and the monitoring-target exclusion region.

15. A fluid image processing method comprising:
a step of performing frequency-domain processing on a first time-series image captured with light having a first wavelength corresponding to a fluid to be monitored to extract a monitoring target and to acquire a monitoring-target candidate region;
a step of performing frequency-domain processing on a second time-series image captured with light having a second wavelength different from the first wavelength to extract a monitoring target and to acquire a monitoring-target exclusion region; and
a step of acquiring a monitoring target based on the monitoring-target candidate region and the monitoring-target exclusion region.
